# EUROPÄISCHE PATENTSCHRIFT

(11) **EP 0 535 460 B1**
(45) Veröffentlichungstag und Bekanntmachung des Hinweises auf die Patenterteilung: **17.01.1996**
(21) Anmeldenummer: 92115918.2
(22) Anmeldetag: 17.09.1992
(51) Int. Cl.: C08F 36/18, C08F 2/26

(54) **Verfahren zur Herstellung von vulkanisierbaren, mercaptan- und/oder xanthogendisulfidgeregelten Polychloropren-Kautschuken mit geringer Formverschmutzung**
Process for preparing vulcanisable polychloroprene rubber with low tendency to foul molds using mercaptans and/or xanthopen disulfides as molecular weight regulators
Procédé pour préparer de caoutchouc de polychloroprène vulcanisable à faible tendence d'encrassage de moules en utilisant des mercaptans et/ou des disulfures de xanthogène régulateurs

(30) Priorität: 30.09.1991 DE 4132463
(43) Veröffentlichungstag der Anmeldung: 07.04.1993
(73) Patentinhaber: BAYER AG, D-51368 Leverkusen (DE)
(72) Erfinder: Wendling, Peter, W-5090 Leverkusen 1 (DE); Obrecht, Werner, Dr., W-4130 Moers (DE); Happ, Michael, Dr., W-4047 Dormagen (DE); Musch, Rüdiger, Dr., W-5060 Bergisch Gladbach (DE); Müller, Eberhard, Dr., W-4047 Dormagen (DE)

(56) Entgegenhaltungen:
- EP-A- 0 324 173

## Beschreibung

Die Erfindung betrifft ein Verfahren zur Herstellung von vulkanisierbarem, mercaptan- und/oder xanthogendisulfidgeregeltem Polychloroprenkautschuk durch Emulsionspolymerisation unter Verwendung von unmodifizierten Harzsäuren und gegebenenfalls Fettsäureestern.

Die Polychloroprenherstellung ist seit langem bekannt, sie erfolgt durch Emulsionspolymerisation im alkalischen wäßrigen Medium, vgl. "Ullmanns Encyclopädie der technischen Chemie", Band 9, S. 366, Verlag Urban und Schwarzenberg, München-Berlin 1957; "Encyclopedia of Polymer Science and Technology", Vol. 3, S. 705-730, John Wiley, New York 1965; "Methoden der Organischen Chemie" (Houben-Weyl) XIV/I, 738 f, Georg Thieme Verlag Stuttgart 1961.

Als Emulgatoren kommen prinzipiell alle Verbindungen und deren Mischungen in Betracht, die die Emulsion hinreichend stabilisieren, wie z.B. die wasserlöslichen Salze, insbesondere die Natrium-, Kalium- und Ammoniumsalze von langkettigen Fettsäuren, Kolophonium und Kolophoniumderivate, höhermolekulare Alkoholsulfate, Arylsulfonsäuren, Formaldehydkondensate von Arylsulfonsäuren, nichtionische Emulgatoren auf Polyethylenoxid- und Polypropylenoxidbasis sowie emulgierend wirkende Polymere, wie Polyvinylalkohol (DE-OS 2 307 811, 2 426 012, 2 514 666, 2 527 320, 2 755 074, 3 246 748, DE-AS 1 271 405, 1 301 502, US-PS 2 234 215, JP-A 60-31 510 (= 58-136 824 vom 28.07.1983)).

Polychloroprene sind wertvolle Kautschuke, die in vielen Gebieten Verwendung finden. Die Vulkanisate des Polychloroprens erhalten ihr Eigenschaftsprofil, indem dem Rohkautschuk Zusatzstoffe, wie Füllstoffe, Beschleuniger, Vulkanisationshilfsmittel, Alterungs- und Ermüdungsschutzmittel und Weichmacher, zugemischt werden und anschließend vulkanisiert wird.

Erfolgt die Formgebung der Vulkanisation in einer Metallform, so können Mischungsbestandteile die Oberfläche der Form derart verunreinigen, daß nach wiederholtem Gebrauch der Metallform Fehler an der Oberfläche des gefertigten Artikels auftreten. Je größer die Formverschmutzung ist, desto häufiger muß die Form gereinigt werden und führt, durch geringere Maschinenstandzeiten und höhere Reinigungskosten, zu wirtschaftlichen Nachteilen.

Es hat daher nicht an Versuchen gefehlt, Polychloropren mit geringer Formverschmutzung herzustellen. So wird in JP-OS 74 37 118, (JP-B-49 37 118) die Herstellung von Polychloropren in Gegenwart von Harzseifen, Alkalisalzen gesättigter oder ungesättigter Fettsäuren und einem Natriumsalz eines Kondensationsproduktes von Formaldehyd und Naphthalinsulfonsäure vorgeschlagen. Die damit erzielte Reduzierung der Formverschmutzung von Metallformen ist jedoch nicht befriedigend. Ebenso läßt sich durch Herstellung von Polychloropren in Gegenwart von ethylenisch ungesättigter und damit polymerisierbarer Styrolfonsäure und deren Derivate (DE-OS 2 535 170 bzw. JP-OS 78 04 031 (JP-B-53 04 031)) eine Formverschmutzung nicht vermeiden. In DE-PS 3 321 902 wird die Herstellung von Polychloropren in Gegenwart von Polystyrolsulfonsäuren und deren Derivate sowie in Gegenwart von Harzsäure beschrieben. Nach diesem Verfahren werden zwar Polychloroprenkautschuke mit geringer Neigung zur Verschmutzung von Metallformen erhalten, nachteilig bei diesem Verfahren ist aber die hohe Abwasserbelastung, die bei der Aufarbeitung des Polymeren auftritt.

Aufgabe der Erfindung war es daher, ein Verfahren zur Herstellung von Polychloropren bereitzustellen, das zu Produkten mit geringer Neigung zur Verschmutzung von Metallformen führt, die bekannt guten Eigenschaften des Polychloroprens erhält und bei dessen Anwendung geringere Abwasserbelastungen auftreten.

Die Lösung der Aufgabe wurde durch die Herstellung von Polychloropren unter Verwendung von unmodifizierten Harzsäuren und gegebenenfalls Fettsäureestern erreicht. Dabei werden Polychloropren-Kautschuke erhalten, die eine geringe Neigung zur Verschmutzung von Metallformen zeigen, gute mechanische Eigenschaften der Vulkanisate aufweisen und bei deren Herstellung geringe Abwasserbelastungen auftreten.

Gegenstand der Erfindung ist daher ein Verfahren zur Herstellung von vulkanisierbarem, mercaptan- und/oder xanthogendisulfidgeregeltem Polychloroprenkautschuk durch Emulsionspolymerisation von Chloropren und, bezogen auf eingesetztes polymerisierbares Monomer, 0 bis 30 Gew.-Teilen, bevorzugt 0 bis 20 Gew.-Teilen, mit Chloropren copolymerisierbaren ethylenisch ungesättigten anderen Monomeren im alkalischen Medium, bei Temperaturen von 0 bis 70°C und bei pH-Werten von 8 bis 14 das dadurch gekennzeichnet ist, daß man bei der Herstellung
(1) 0,1 bis 10, bevorzugt 0,5 bis 6, Gew.-Teile einer tricyclischen Diterpencarbonsäure mit mindestens zwei konjugierten C=C-Doppelbindungen pro Molekül, bezogen auf eingesetztes polymerisierbares Monomer, und gegebenenfalls
(2) 0,1 bis 5, bevorzugt 0,2 bis 3, Gew.-Teile, bezogen auf eingesetztes polymerisierbares Monomer, Fettsäureester einsetzt.

Die erfindungsgemäß einzusetzenden tricyclischen Diterpencarbonsäuren können in Form der rohen, unmodifizierten Harzsäuren (s. W. Barendrecht, L.T. Lees in Ullmanns Encyclopädie der Technischen Chemie, 4. Aufl. Bd. 12, 528-538, Verlag Chemie, Weinheim - New York 1976), die aus Tallöl, Kiefernbalsam oder Wurzelharz gewonnen werden, verwendet werden, sofern diese frei von destillierbaren Bestandteilen des Terpentinöls sind, dic sich inhibierend erwiesen haben.

Wenn die tricyclischen Diterpencarbonsäuren selbst leicht zugänglich sind, können sie auch in reiner Form eingesetzt werden.

Geeignete tricyclische Diterpencarbonsäuren umfassen beispielsweise Abietinsäure, Palustrinsäure, Neoabietinsäure und Lävopimarsäure.

Die tricyclischen, konjugiert ungesättigten Diterpencarbonsäuren können aus einem Gemisch von Harzsäuren nach Art und Menge durch Gaschromatographie bestimmt werden; beispielsweise gemäß oder analog J. Amer. Oil Chem. Soc. 54, 289 (1977).

Wird eine aus Tallöl, Kiefernbalsam oder Wurzelharz gewonnene, unmodifizierte Harzsäure eingesetzt, enthält diese naturgemäß nicht nur tricyclische, konjugiert ungesättigte Diterpencarbonsäuren, sondern auch weitere Bestandteile. Ohne einschränkend zu sein, kann als Beispiel für geeignete, kommerziell verfügbare unmodifizierte Harzsäuren, die wie folgt zusammengesetzte, aus Tallöl gewonnene Harzsäure genannt werden:

| | Anteil in % |
|---|---|
| Abietinsäure | 40 |
| Neoabietinsäure | 4 |
| Palustrinsäure | 7 |
| Pimarsäure | 3 |
| Isopimarsäure | 6 |
| Dehydroabietinsäure | 23 |
| andere Resinsäuren | 12 |
| | |
| Summe aller Harzsäuren | 95 |
| Fettsäuren | 2 |
| kombinierte Säuren | 1 |
| unverseifbare Anteile | 2 |

(aus der Firmenschrift der Fa. Bergvik Kemi AB, Söderhamn, Schweden).

Als weiteres Beispiel sei die Zusammensetzung einer aus Kiefernbalsam gewonnenen unmodifizierten Harzsäure genannt:

| | Anteil in % |
|---|---|
| Abietinsäure | 46 |
| Neoabietinsäure | 16 |
| Palustrinsäure | 18 |
| Pimarsäure | 8 |
| Isopimarsäure | 1 |
| andere Resinsäuren | 10 |

Neben den tricyclischen, konjugiert ungesättigten Diterpencarbonsäuren können zusätzlich auch weitere emulgierende Substanzen eingesetzt werden. So zeigt beispielsweise der Zusatz geringer Mengen eines wasserlöslichen Salzes des Kondensationsproduktes aus Napthalinsulfonsäure und Formaldehyd Vorteile bei der Aufarbeitung des Polymeren nach dem Verfahren der Gefrierkoagulation (Chem. Engng., Progr. 43, 391 (1974, DE 1 051 506). Die Verwendung weiterer emulgierender Substanzen findet ihre Grenzen, wenn Art und Menge das Abwasser ungebührlich hoch belasten.

Die tricyclischen, konjugiert ungesättigten Diterpencarbonsäuren können sowohl in freier Form als auch in Form wasserlöslicher Salze eingesetzt werden. Wird die freie Säure verwendet, so wird diese bevorzugt im Ausgangsmonomeren gelöst eingesetzt. Werden die wasserlöslichen Salze der Diterpencarbonsäuren verwendet, werden diese in der wäßrigen Phase gelöst eingesetzt.

Unter geeigneten Fettsäureestern sind solche zu verstehen, bei denen die zugrundeliegenden Fettsäuren ungesättigte Carbonsäuren mit 11 bis 22 C-Atomen und gesättigte Carbonsäuren mit 4 bis 30 C-Atomen sowie deren Gemische darstellen. Die den Estern zugrundeliegenden Alkohole weisen 1 bis 12 C-Atome auf.

Wenn in Gegenwart von Fettsäureestern polymerisiert wird, können diese beispielsweise im Monomeren gelöst vor Beginn während oder nach der Polymerisation zugesetzt werden.

Erfolgt die Zugabe nach dem der Latex von nicht umgesetztem Monomer befreit ist, erfolgt die Zugabe vernünftigerweise als Dispersion.

Bevorzugte mit Chloropren copolymerisierbare, ethylenisch ungesättigte "andere Monomere" umfassen Verbindungen mit 3 bis 12 C-Atomen und 1 oder 2 copolymerisierbaren C=C-Doppelbindungen pro Molekül. Beispiele bevorzugter "anderer Monomere" sind Styrol, 2,3-Dichlorbutadien, 1-Chlorbutadien, Butadien, Isopren, Acrylsäure, Methacrylsäure, Acrylnitril und Methacrylnitril. Wichtigste Comonomere sind 2,3-Dichlorbutadien und 1-Chlorbutadien.

Die Herstellung der erfindungsgemäßen Polychloroprene erfolgt durch Emulsionspolymerisation bei 0 bis 70°C, vorzugsweise bei 5 bis 50°C, und bei pH-Werten von 8 bis 14, vorzugsweise 9 bis 13. Die Aktivierung erfolgt durch übliche Aktivatoren bzw. Aktivatorsysteme.

Als Beispiele seien genannt: Formamidinsulfinsäure, Kaliumperoxodisulfat, Redoxsysteme auf Basis von Kaliumperoxodisulfat und gegebenenfalls Silbersalz (Na-Salz der Anthrachinon-β-sulfonsäure) wobei beispielsweise Verbindungen wie Formamidinsulfinsäure, Na-Salz der Hydroxymethansulfinsäure, Natriumsulfit und Natriumdithionit als Redoxpartner dienen. Auch Redoxsysteme auf Basis von Peroxiden und Hydroperoxiden sind geeignet. Die Herstellung der erfindungsgemäßen Polychloroprene kann sowohl kontinuierlich als auch diskontinuierlich erfolgen.

Zur Viskositätseinstellung der erfindungsgemäßen Polychloroprene können übliche Kettenübertragungsmittel wie Mercaptane, wie sie z.B. in DE-OS 3 002 711, GB-PS 1 048 235, FR-PS 2 073 106 beschrieben sind, oder wie Xanthogendisulfide, wie sie z.B. in DE-AS 1 186 215, in den DE-OS 2 156 453, 2 306 610 und 3 044 811, in der EP-PS 53 319, in den GB-PS 512 458 und 952 156 und in den US-PS 2 321 693 und 2 567 117 beschrieben sind, verwendet werden.

Besonders bevorzugte Kettenübertragungsmittel sind n-Dodecylmercaptan und die in DE-OS 3 044 811, DE-OS 2 306 610 und DE-OS 2 156 453 verwendeten Xanthogendisulfide.

Nach Durchführung der Polymerisation bis zum gewünschten Umsatz, der üblicherweise bei löslichem Polychloropren zwischen 60 und 80 % und bei PolychloroprenGel über 80 % liegt, ist es vorteilhaft, die Reaktion durch Zugabe bekannter Abstoppmittel wie tert.-Butylbrenzkatechin, Phenothiazin und Diethylhydroxylamin abzubrechen. Nicht umgesetzte Monomere können mit Hilfe von Dampf und Vakuum entfernt werden.

Das nach dem erfindungsgemäßen Verfahren hergestellte Polymere kann nach bekannten Verfahren aufgearbeitet werden, z.B: durch Sprühtrocknung, Gefriertrocknung oder Koagulation mittels Zusatz von anorganischen oder organischen Salzen, Säuren, Basen oder organischen mit Wasser mischbaren Lösungsmitteln wie Alkoholen und Ketonen. Bevorzugte Aufarbeitungsmethode ist die Gefrierkoagulation (Chem. Engng., Progr. 43, 391 (1974); DE-C1 1 051 506).

Zur Verbesserung der Lagerstabilität des Polymeren können übliche phenolische, aminische, phosphor- und schwefelhaltige Stabilisatoren zugesetzt werden.

Das erfindungsgemäß hergestellte Polychloropren besitzt im allgemeinen eine Mooneyviskosität (nach DIN 53 525) von 5 bis 140 ME (ML 1+4, 100°C), vorzugsweise 15 bis 120 ME.

Die erfindungsgemäß hergestellten Polychloroprene können unvernetzt, d.h. toluollöslich, oder vernetzt sein. Die Vernetzung wird üblicherweise durch erhöhten Monomerumsatz oder durch Zusatz vernetzend wirkender Monomere bei der Polymerisation erreicht. Anwendung finden üblicherweise Polymerblends von vernetzten und unvernetzten Polychloroprenen, diese sind dem Fachmann als Ge/Sol-Mischungen bekannt. Ihre Herstellung wird beispielsweise in EP 0 065 718, 0 303 089, DE 2 352 937, US 3 147 317 beschrieben.

Die erfindungsgemäß hergestellten Polychloroprene lassen sich beispielsweise in Gegenwart von Vulkanisationschemikalien aus der Klasse der Zink- und/oder Magnesiumoxide, gegebenenfalls nach Zusatz von Füllstoffen und gegebenenfalls von weiteren Zusätzen, bei erhöhter Temperatur, bei üblichen Temperaturen von 100 bis 200°C, vulkanisieren.

Weiterer Gegenstand der Erfindung sind die aus den erfindungsgemäß hergestellten Polychloroprenen erhaltenen Vulkanisate.

Die folgenden Beispiele beschrieben die vorliegende Erfindung.

### Beispiele

### 1) Herstellung der erfindungsgemäßen Beispiele und der Vergleichsbeispiele.

### a) Rezepturen

Die Herstellung erfolgte nach folgender Grundrezeptur (Angabe in Gew.-Teilen pro 100 Gew.-Teile eingesetzte Monomere):

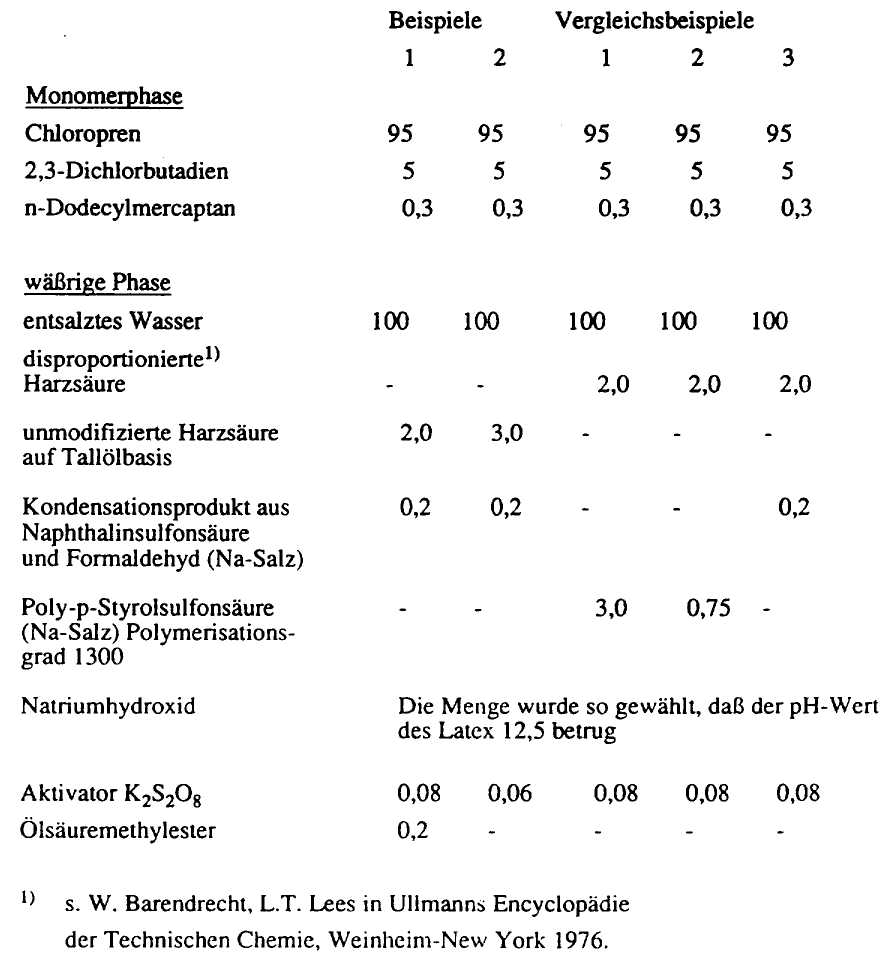

### b) Durchführung der Versuche

In einem 250 l Reaktor wird die wäßrige Phase und die Monomerphase vorgelegt und mit Stickstoff gespült. Nach Aufheizen der Emulsion auf 40°C wird die Polymerisation durch Zugabe einer geringen Menge an 0,5 %iger wäßriger Kaliumpersulfätlösung gestartet und durch kontinuierliche Zugabe der gleichen Lösung die Polymerisation bis zu einem Umsatz von 70 % durchgeführt. Nach Erreichen des Umsatzes wird die Polymerisation durch Zugabe von je 0,01 Teilen tert.-Butylbrenzkatechin und Phenothiazin in Form einer toluolischen Emulsion abgestoppt. Wurde Ölsäuremethylester verwendet, wurde dieser in Chloropren gelöst und zugesetzt. Die nicht umgesetzten Monomeren werden im Vakuum mit Hilfe von Dampf bis zu einem Restmonomergehalt von ca. 500 ppm entfernt.

### c) Isolierung des Polymeren im pilot-plant-Maβstab

Um die, für die anwendungstechnischen Untersuchungen benötigten, größeren Polymermengen zu erhalten, wurden die Latices der erfindungsgemäßen Beispiele 1 und 2 sowie die der Vergleichsbeispiele 1, 2 und 3 mittels Gefrierkoagulation nach dem Stand der Technik, wie sie beispielsweise in Chem. Engng., Progr. 43, 391 (1974) und in DE-C1 1 051 506 beschrieben ist, bei pH-Wert 6,5 im pilot-plant-Maßstab aufgearbeitet.

### 2) Anwendungstechnische Untersuchungen

An den Polymeren der erfindungsgemäßen Beispiele 1 und 2 und der Vergleichsbeispiele 1, 2 und 3 wurden mechanische Eigenschaften an den Vulkanisaten und die Neigung zur Verunreinigung von Metalloberflächen unter Vulkanisationsbedingungen untersucht. Ferner wurde die Mooneyviskosität (ML 1+4) nach DIN 53 525 Teil 1-3 bei 100°C bestimmt.

Zur Ermittlung der mechanischen Vulkanisateigenschaften wurden die Polymeren in der Iso-Mischung 2475 eingesetzt und bei 150°C vulkanisiert:

| | |
|---|---|
| 100,0 Gew.-Teile | Polymere |
| 0,5 Gew.-Teile | Stearinsäure |
| 2,0 Gew.-Teile | Phenyl-β-naphthylamin |
| 3,0 Gew.-Teile | Ruß (N 762) |
| 4,0 Gew.-Teile | Magnesiumoxid |
| 5,0 Gew.-Teile | Zinkoxid aktiv |
| 0,5 Gew.-Teile | Ethylenthioharnstoff |

Am Vulkanisat erfolgten die Bestimmungen von Zugfestigkeit, Bruchdehnung und Modul bei 300 % Dehnung nach einer Vulkanisationszeit von 30 Minuten nach DIN 53 504.

Zur Ermittlung des Formverschmutzungsverhaltens wurden die Polymeren in folgender Mischung eingesetzt:

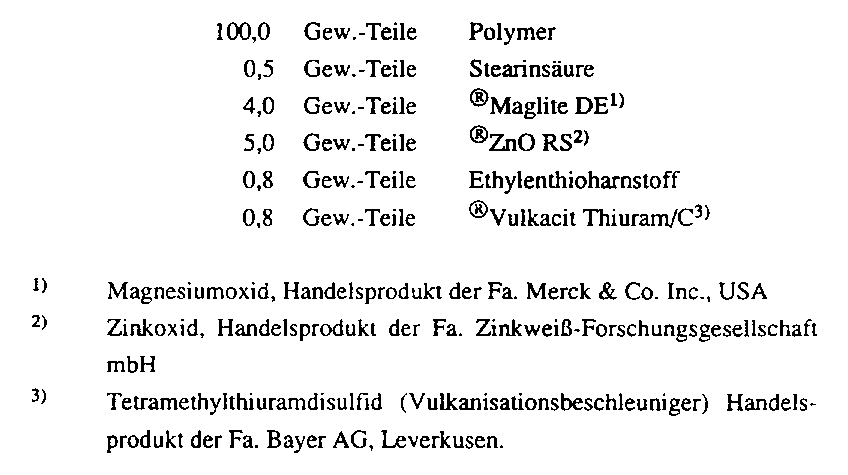

Eine beim IKV Aachen entwickelte Form für das Spritzgießen (P. Barth, Spritzgießen von Gummiformteilen, pp. 85 ff., VDI-Verlag 1988) diente zur Messung der Formverschmutzung. Als Aggregat wurde eine Spritzgießmaschine der Fa. DESMA (Achim) Nr. 962 verwendet.

Um zu einer zuverlässigen Bewertung zu gelangen wurden 200 Spritzcyclen durchgeführt. Die Temperatur betrug 200°C, die Vulkanisationszeit 2 Minuten für jeden Spritzcyclus.

Als Bewertungskriterium diente das Aussehen der Spritzform. Hier ist insbesondere das Aussehen des Formnestes und das Aussehen von Rändern und Einbauten der Form wichtig. An diesen Stellen können Dieseleffekte und der Beginn von Ablagerungen gut beobachtet werden.

Die Ergebnisse aller Beobachtungen wurden in folgender Bewertung zusammengefaßt:

| | |
|---|---|
| keine Formverschmutzung | 1 |
| geringe Formverschmutzung | 2 |
| mäßige Formverschmutzung | 3 |
| große Formverschmutzung | 4 |
| sehr große Formverschmutzung | 5 |

Die Ergebnisse der anwendungstechnischen Untersuchungen sind in Tabelle 1 zusammengefaßt.

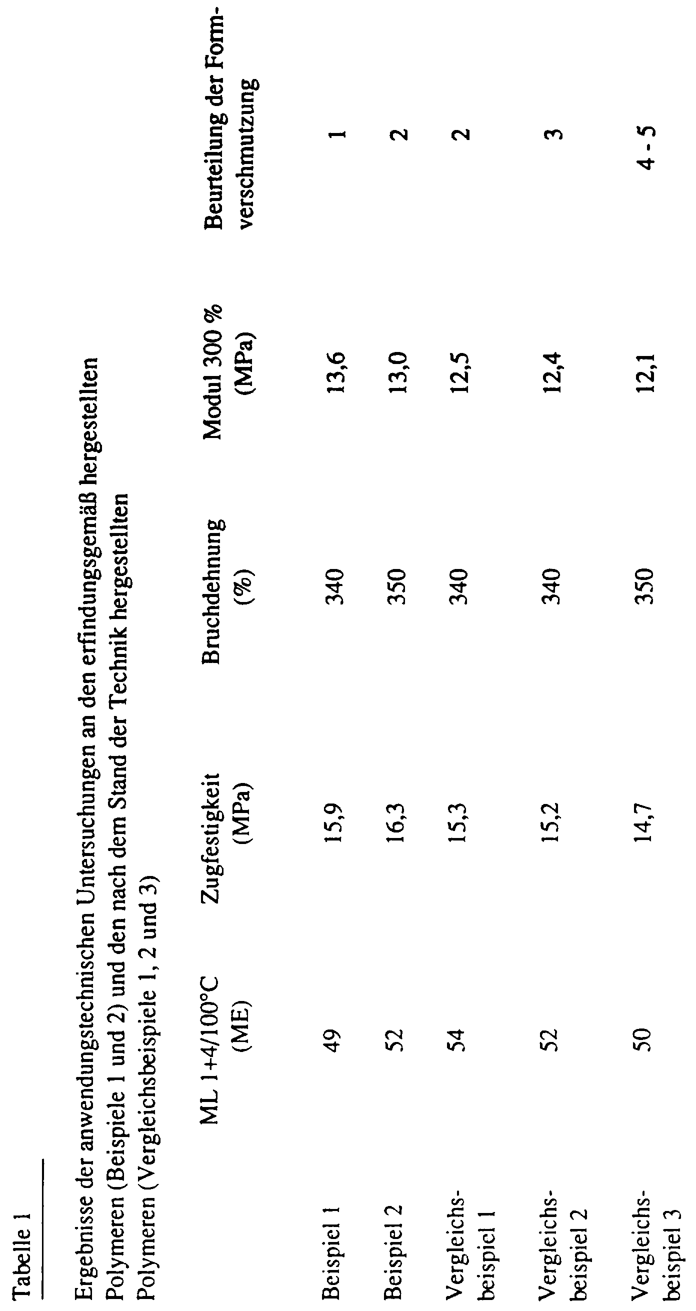

### 3) Ermittlung der Abwasserbelastung bei der Aufarbeitung

Durch eine Aufarbeitung zur Isolierung des Polymeren mittels Gefrierkoagulation unter definierten Bedingungen sollte die Abwasserbelastung durch die nach dem erfindungsgemäßen Verfahren (Beispiel 1) und dem nach dem Stand der Technik (Vergleichsbeispiel 1) erhaltenen, von nicht umgesetzten Monomeren befreiten Latices ermittelt werden.

Ausgehend von einer Polymerkonzentration von 25 Gew.-% wurden von jedem Latex zwei Polymerfelle in einer Edelstahlwanne, die einer Tempertur von -50°C ausgesetzt war, ausgefroren. Hierzu wurden die Latices mit 20 %iger Essigsäure von pH 12,5 auf pH 6,5 gestellt. Für jedes Fell wurden 100 g Latex eingesetzt. Durch die Verwendung gleicher Latexmengen und der gleichen Edelstahlwanne war die Felldicke jedes Felles gleich. Damit wurde ein Einfluß der Felldicke auf die Wascheffizienz vermieden. Die Fellmaße betrugen 28 x 18 cm, die Felldicke betrug 2 mm.

Die beiden ausgefrorenen Felle eines jeden Latex wurden in ein mit 2 500 ml entsalztes Wasser gefülltes Becken gehängt und 30 Minuten dort belassen. Die Felle wurden mit einer kleinen Quetschwalze auf eine Restfeuchte von 30 % entwässert und das ausgetretene Quetschwasser mit dem im Becken befindlichen Waschwasser zum gesamten Abwasser vereinigt. Von diesem Aufarbeitungsabwasser wurde der CSB-Wert nach DIN 38 409 H 41/1 ermittelt. Es wurden folgende Werte erhalten:

**Tabelle 2**

| CSB-Werte der bei der Aufarbeitung anfallenden Abwässer | | |
|---|---|---|
| | CSB (mg/l) | g CSB pro kg hergestelltes Polychloropren |
| Beispiel 1 | 210 | 11 |
| Vergleichsbeispiel 1 | 1160 | 61 |

### 4) Bewertung der erhaltenen Ergebnisse

Der Vergleich der in den Tabellen 1 und 2 aufgeführten Ergebnisse zeigt, daß für das erfindungsgemäβe Herstellverfahren (Beispiele 1 und 2) gegenüber dem Stand der Technik herangezogenen Verfahren (Vergleichsbeispiele 1, 2 und 3) Vorteile bestehen.

Bei dem Verfahren nach dem neuesten Stand der Technik zeigt sich, daß nur bei Verwendung einer großen Menge Poly-p-styrolsulfonsäure (Vergleichsbeispiel 1, Tabelle 1) das erhaltene Polymere eine ähnlich geringe Neigung zur Formverschmutzung aufweist wie die erfindungsgemäß hergestellten Polymeren (Beispiel 1 und 2, Tabelle 1).

Nachteilig ist dabei jedoch die daraus resultierende, gegenüber dem erfindungsgemäßen Verfahren deutlich höhere Abwasserbelastung (siehe Tabelle 2, Beispiel 1 und Vergleichsbeispiel 1).

Wird eine geringe Menge Poly-p-styrolsulfonsäure verwendet (Vergleichsbeispiel 2), so zeigt das Polymere eine größere Formverschmutzung als die erfindungsgemäß hergestellten Polymeren (Beispiel 1 und 2).

Die alleinige Verwendung disproportionierter Harzsäure (Vergleichsbeispiel 3) führt zu der größten Formverschmutzung.

## Patentansprüche

1. Verfahren zur Herstellung von vulkartisierbarem, mercaptan- und/oder xanthogendisulfidgeregeltem Polychloroprenkautschuk durch Emulsionspolymerisation von Chloropren und, bezogen auf eingesetztes polymerisierbares Monomer, 0 bis 30 Gew.-Teile mit Chloropren copolymerisierbaren ethylenisch ungesättigten anderen Monomeren im alkalischen Medium, bei Temperaturen von 0 bis 70 °C und bei pH-Werten von 8 bis 14, dadurch gekennzeichnet, daβ man bei der Herstellung
(1) 0,1 bis 10 Gew.-Teile einer tricyclischen Diterpencarbonsäure mit mindestens zwei konjugierten C=C-Doppelbindungen pro Molekül, bezogen auf eingesetztes polymerisierbares Monomer, und gegebenenfalls
(2) 0,1 bis 5 Gew.-Teile, bezogen auf eingesetztes polymerisierbares Monomer, Fettsäureester einsetzt.

2. Verfahren nach Anspruch 1, dadurch gekennzeichnet, daß die den Estern (2) zugrunde liegenden Fettsäuren ungesättigte Carbonsäuren mit 11 bis 22 C-Atomen sowie deren Gemische darstellen.

3. Verfahren nach Anspruch 1, dadurch gekennzeichnet, daß die den Estern (2) zugrunde liegenden Fettsäuren gesättigte Carbonsäuren mit 4 bis 30 C-Atomen sowie deren Gemische darstellen.

4. Verfahren nach Anspruch 1, dadurch gekennzeichnet, daß die den Estern (2) zugrundeliegenden Fettsäuren Gemische aus den in den Ansprüchen 3 und 4 genannten Fettsäuren darstellen.

5. Verfahren nach Anspruch 1, dadurch gekennzeichnet, daß die den Estern (2) zugrunde liegenden Alkohole, solche mit 1 bis 12 C-Atomen sowie deren Gemische darstellen.

6. Verwendung des nach Anspruch 1 erhältlichen Polychloroprens zur Herstellung von Vulkanisaten.

## Claims

1. A process for the production of vulcanizable, mercaptan- and/or xanthogen-disulfide-regulated polychloroprene rubber by emulsion polymerization of chloroprene and, based on polymerizable monomer used, 0 to 30 parts by weight ethylenically unsaturated, other monomers copolymerizable with chloroprene in an alkaline medium at temperatures of 0 to 70°C and at pH values of 8 to 14, characterized in that
(1) 0.1 to 10 parts by weight of a tricyclic diterpene carboxylic acid containing at least two conjugated C=C double bonds per molecule, based on the polymerizable monomer used, and optionally
(2) 0.1 to 5 parts by weight, based on polymerizable monomer used, of fatty acid esters
are used in the production process.

2. A process as claimed in claim 1, characterized in that the fatty acids on which the esters (2) are based are unsaturated carboxylic acids containing 11 to 22 carbon atoms and mixtures thereof.

3. A process as claimed in claim 1, characterized in that the fatty acids on which the esters (2) are based are saturated carboxylic acids containing 4 to 30 carbon atoms and mixtures thereof.

4. A process as claimed in claim 1, characterized in that the fatty acids on which the esters (2) are based are mixtures of the fatty acids mentioned in claims 3 and 4.

5. A process as claimed in claim 1, characterized in that the alcohols on which the esters (2) are based are alcohols containing 1 to 12 carbon atoms and mixtures thereof.

6. The use of the polychloroprene obtainable by the process claimed in claim 1 for the production of vulcanizates.

## Revendications

1. Procédé de préparation d'un caoutchouc de polychloroprène vulcanisable, avec régulateurs du type mercaptan et/ou disulfure de xanthogène, par polymérisation en émulsion du chloroprène et de O à 30 parties en poids, par rapport au monomère polymérisable mis en oeuvre, d'autres monomères à insaturation éthylénique copolymérisables avec le chloroprène en milieu alcalin à des températures de 0 à 70°C et des pH de 8 à 14, caractérisé en ce que l'on met en oeuvre à la préparation
(1) 0,1 à 10 parties en poids d'un acide diterpène carboxylique tricyclique à au moins deux doubles liaisons C=C conjuguées par molécule, par rapport au monomère polymérisable mis en oeuvre, et le cas échéant
(2) 0,1 à 5 parties en poids, par rapport au monomère polymérisable mis en oeuvre, d'esters d'acides gras.

2. Procédé selon la revendication 1, caractérisé en ce que les acides gras des esters (2) sont des acides carboxyliques insaturés en C₁₁-C₂₂ ou leurs mélanges.

3. Procédé selon la revendication 1, caractérisé en ce que les acides gras des esters (2) sont des acides carboxyliques saturés en C₄-C₃₀ et leurs mélanges.

4. Procédé selon la revendication 1, caractérisé en ce que les acides gras des esters (2) sont des mélanges des acides gras des revendications 3 et 4.

5. Procédé selon la revendication 1, caractérisé en ce que les alcools des esters (2) sont des alcools en C₁-C₁₂ ou leurs mélanges.

6. Utilisation du polychloroprène obtenu selon la revendication 1 pour la fabrication de vulcanisats.
